(19) Europäisches Patentamt
European Patent Office
Office européen des brevets

(11) **EP 0 452 440 B1**

(12) **EUROPÄISCHE PATENTSCHRIFT**

(45) Veröffentlichungstag und Bekanntmachung des Hinweises auf die Patenterteilung:
**03.07.1996 Patentblatt 1996/27**

(21) Anmeldenummer: 90915412.2

(22) Anmeldetag: 21.10.1990

(51) Int. Cl.$^6$: **B23K 11/25**, G05B 13/02

(86) Internationale Anmeldenummer:
**PCT/DE90/00803**

(87) Internationale Veröffentlichungsnummer:
**WO 91/06392 (16.05.1991 Gazette 1991/11)**

(54) **VERFAHREN ZUR AUTOMATISCHEN PARAMETERBESTIMMUNG FÜR PROZESSREGELSYSTEME MIT UNBEKANNTEM UEBERTRAGUNGSVERHALTEN, INSBESONDERE FUER PROZESSREGELSYSTEME ZUM WIDERSTANDSPUNKTSCHWEISSEN, UND VORRICHTUNG ZUR DURCHFUEHRUNG DES VERFAHRENS**

PROCESS AND DEVICE FOR AUTOMATIC DETERMINATION OF PARAMETERS FOR PROCESS CONTROL SYSTEMS WITH UNKNOWN TRANSFER BEHAVIOUR, IN PARTICULAR FOR PROCESS CONTROL SYSTEMS FOR RESISTANCE SPOT WELDING

PROCEDE ET DISPOSITIF POUR LA DETERMINATION AUTOMATIQUE DE PARAMETRES POUR DES SYSTEMES DE CONTROLE DE PROCESSUS A COMPORTEMENT AU TRANSFERT INCONNU, NOTAMMENT POUR SYSTEMES DE CONTROLE DE PROCESSUS DESTINES AU SOUDAGE PAR POINTS

(84) Benannte Vertragsstaaten:
**AT BE CH DE DK ES FR GB GR IT LI LU NL SE**

(30) Priorität: **27.10.1989 DE 3936329**

(43) Veröffentlichungstag der Anmeldung:
**23.10.1991 Patentblatt 1991/43**

(73) Patentinhaber: **INPRO INNOVATIONSGESELLSCHAFT FÜR FORTGESCHRITTENE PRODUKTIONSSYSTEME IN DER FAHRZEUGINDUSTRIE MBH D-10787 Berlin (DE)**

(72) Erfinder:
• **KIRMSSE, Helmut D-1000 Berlin 30 (DE)**

• **WESSELMANN, Ludger D-1000 Berlin 30 (DE)**

(74) Vertreter: **Hoffmann, Klaus-Dieter, Dipl.-Ing. Kurfürstendamm 182 10707 Berlin (DE)**

(56) Entgegenhaltungen:
**DE-A- 3 510 665        DE-A- 3 545 158
DE-A- 3 711 771        US-A- 4 694 135**

• **WELDING JOURNAL. vol. 69, no. 5, Mai 1990, MIAMI US Seiten 186S - 196S; C.C. DOUMANIDIS ET AL.: "SIMULTANEOUS IN-PROCESS CONTROL OF HEAT-AFFECTED ZONE AND COOLING RATE DURING ARC WELDING" siehe Seite 186S, linke Spalte, Absatz 1 - Seite 196S, linke Spalte, Absatz 2; Figuren 1-21**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur automatischen Parameterbestimmung für Prozeßregelsysteme mit unbekanntem Übertragungsverhalten, gemäß dem Oberbegriff des Patentanspruchs 1.

Es ist bekannt, bei Prozeßregelsystemen zur Sicherung der Güte von Widerstandsschweißverbindungen eine Ersatzgröße als Führungsgröße zu benutzen, da die eigentlich interessierende Größe, der Linsendurchmesser, während des Schweißprozesses nicht zu überwachen ist (Druckschrift "Schweißen und Schneiden", Jahrgang 32 (1980), Heft 12, Seiten 491 bis 495).

Bekannt ist weiterhin ein Verfahren für die Prozeßregelung beim Punktschweißen (DE-OS 3711771), bei dem die für den Schweißprozeß vorgegebenen mechanischen und/oder elektrischen Prozeßgrößen während des Schweißens überwacht werden und jede Veränderung der Prozeßgröße innerhalb des Schweißvorgangs über mehrere Stellgrößen nachregelbar ist. Der Schweißbereich wird hier für die Regelung in mehrere Bereiche unterteilt, wobei jedem dieser Bereiche ein Bewertungsschema zugeordnet ist. Der Kurvenverlauf für verschiedene Werkstoffe und Abmessungen wird an realen Bauteilen ermittelt und gespeichert.

Bekannt ist ferner ein Regler (DE-PS 37 43 892), der aus einer getakteten Vorgabesteuerung, die eine sekundäre Führungsgröße erzeugt, und einem getakteten Sekundärregler besteht. Dieser Regler adaptiert sich auf jeden einzelnen Regelprozeß im Verlaufe der Zeit, die der Regelprozeß andauert. Der Regelprozeß wird in Takte zergliedert, in denen jeweils adaptive Schritte eingeleitet werden.

Ist die Bildung einer mathematisch-physikalischen Modellvorstellung über den Prozeß, aus der sich Führungsgrößen und andere Parameter eines Regelsystems bestimmen lassen, nicht möglich oder nicht angezeigt, verbleiben oft nur noch die Alternativen entweder einer

- Prozeßsteuerung, bei der die Steuerparameter zur Erreichung der Zielfunktion optimiert und Störeinflüsse auf den Prozeß entweder durch geeignete Maßnahmen verhindert oder - z.B. durch Messung und Störgrößenausschaltung - kompensiert werden, oder einer

- Prozeßregelung mit einer Führungsgröße, die die Zielfunktion nur ungenügend beschreibt und somit Störungen und fehlerhafte Prozeßverläufe nur bedingt ausgleichen kann.

Der Erfindung liegt die Aufgabe zugrunde, ein Verfahren der eingangs erwähnten Art anzugeben, mit der die Regelung spezieller technischer Prozesse, bei denen ein funktioneller Zusammenhang zwischen Prozeßeingangs- und -ausgangsgrößen zumindest in Teilen unbekannt ist, unter Einhalten bestimmter Grenzen der Eigenschaften der Ausgangsgrößen (Zielfunktion) zufriedenstellend gewährleistet wird.

Diese Aufgabe wird erfindungsgemäß durch die Merkmale des Patentanspruchs 1 gelöst.

Vorteilhafte Weiterbildungen der Erfindung ergeben sich aus den übriger Patentansprüchen.

Kennzeichen von Prozessen, bei denen ein funktioneller Zusammenhang zwischen Prozeßeingangs- und -ausgangsgrößen zumindest in Teilen unbekannt ist, sind, daß

- in den Prozeß (z.B.: Maschine, Reaktor) variable, d.h. von außen veränderbare Eingangsgrößen eingehen, durch die der Prozeß beeinflußbar ist,

- auf den Prozeß Störgrößen wirken, deren Auftreten und Auswirkungen aus den Prozeß nicht vorhersehbar sind und daß

- das Ergebnis des Prozesses eine oder mehrere Ausgangsgrößen sind, die bestimmte, vordefinierte Eigenschaften aufweisen sollen.

In vielen Fällen ist die Zielfunktion eine nicht direkt meßbare Größe, so daß sie nicht - im Sinne eines "klassischen" Regelkreises - auf den Prozeßeingang rückgekoppelt werden kann. Andererseits besteht zwischen Zielfunktion und meßbaren physikalischen Größen, die nicht unbedingt Ausgangsgrößen sein müssen, oft keine eindeutige Korrelation, so daß das Problem darin liegt, eine oder mehrere Führungsgrößen für eine Prozeßregelung zur definieren, die eine hinreichend genaue Beschreibung des Prozeßzustandes bzw. des Prozeßverlaufes erlauben.

Ausgangspunkt der Erfindung ist der Aufbau eines Prozeßregelsystems mit einer oder mehreren Stellgrößen und mehreren Führungsgrößen. Die Führungsgrößen werden aus den meßbaren Prozeßgrößen abgeleitet. Diese Ableitungen haben das Ziel, den Informationsgehalt der Meßsignale im Sinne einer Merk malsextraktion zu reduzieren.

Die Regelung erfolgt für jede Stellgröße nach der passierten Regelvorschrift.

Meßgrößen und die Ableitungen hieraus (Führungsgrößen), die als Rechenvorschriften vorliegen, lassen sich nicht pauschalisieren und müssen auf den jeweiligen Prozeßtyp zugeschnitten werden. Weiterhin wird vorausgesetzt, daß der Prozeß prinzipiell wiederholbar ist und periodisch abläuft oder sich nach anderen Prozeßstadien (-größen), z.B. dem Weg, zeitlich diskretisieren läßt.

Der Umrechnungsfaktor entspricht der Empfindlichkeit des Systems und muß dem jeweiligen Prozeß angepaßt werden. Reagiert das System bezüglich verschiedener Führungsgrößen unterschiedlich empfindlich, kann auch für jede Führungsgröße ein Umrechnungsfaktor eingeführt werden.

Bei dem erfindungsgemäßen Verfahren werden die Sollwerte der Führungsgrößen und die normierten Wichtungsfaktoren bestimmt, so daß damit unmittelbar die Regelung durchgeführt werden kann.

Die in Echtzeit zu messenden Prozeßdaten (Signalfunktionen) werden erfaßt und gespeichert. Führungsfunktionen, deren zeitlicher Verlauf den Prozeßverlauf beschreiben sollen, werden berechnet. Diese Führungsfunktionen resultieren aus der Vorverarbeitung der Signalfunktionen, zu der auch Verknüpfungen mehrerer Meßgrößen (z.B.: Führungsfunktion "elektrischer Widerstand" = Quotient aus Signalfunktionen "Spannung" und "Strom") zählen. Die Rechenvorschriften für die einzelnen Führungsfunktionen sind abhängig vom Prozeßtyp und werden vom Anwender des Regelsystems vorgegeben. Der Anwender kann eine beliebige Anzahl von Führungsfunktionen vorgeben. Dabei können auch solche gewählt werden, von denen nicht von vornherein ein Zusammenhang mit der Zielfunktion erwartet wird.

Aus einer Anzahl protokollierter Prozeßdurchläufe, die bei geöffneten (Prozeßsteuerung) oder auch geschlossenem Regelkreis stattfinden können und deren Signalfunktionen aufgezeichnet wurden, können Führungsfunktionen erstellt und statistisch ausgewertet werden. Hierbei werden die Führungsfunktionen bezüglich der Einhaltung bestimmter Grenzen der Zielfunktion nach Kategorien gemäß dem Prozeßergebnis sortiert.

Im Rahmen einer Analyse werden für jede einzelne Führungsfunktion eine Mittelwert- und eine Fehlerfunktion berechnet. Die Fehlerfunktion beschreibt die Reproduzierbarkeit der Führungsfunktion für verschiedene Versuche, deren Versuchsergebnis gleich klassifiziert werden. Als Ergebnis der Analyse stehen für die Regelung zur Verfügung:

- Die Mittelwertkurven einer ersten Kategorie, die als Sollwerte für die einzelnen Führungsgrößen direkt dem Prozeßregler zugeführt werden,

- die Standardabweichungen der Mittelwertkurven einer zweiten Kategorie,

- die Mittelwertkurven einer dritten Kategorie, die gegebenenfalls unterteilt wird.

Aus den Mittelwertkurven und deren Bandbreiten (Standardabweichungen) werden die Wichtungsfunktionen für die einzelnen Führungsgrößen berechnet.

Die Wichtungsfunktionen werden auf Werte zwischen +1 und -1 normiert. Nach der Normierung kennzeichnet der Wert "O" eine Stelle der Kennfunktion, die - bezüglich des zu erwartenden Prozeßergebnisses nicht signifikant ist, während die Werte +1 und -1 Stellen höchster Signifikanz (= Korrelation zwischen Führungsgröße und Zielfunktion) deutlich machen.

Das Vorzeichen der einzelnen Werte der Wichtungsfunktionen entscheidet über die Richtung der Änderung der Stellgröße, falls eine Regelabweichung detektiert wird.

Die Erfindung erweist sich insbesondere dadurch als vorteilhaft, daß durch sie bei der Erstellung eines Prozeßregelsystems mit den erwähnten Randbedingungen ein Hilfsmittel gegeben ist, mit dem Regelparameter wie Sollwertfunktionen und Wichtungsfaktoren sich automatisch bestimmen lassen, wobei durch diverse Eingriffsmöglichkeiten seitens des Anwenders weitgehende Flexibilität gewahrt bleibt, um individuelle Anpassung an unterschiedliche technische Prozesse zu ermöglichen.

Die Sensoren der Prozeßregelschaltung können je nach Anwendungsfall von optischen, chemischen und/oder elektrischen Aufnehmern für optische, elektrische, mechanische oder Stoffgrößen wie Konzentration, Dichte und dgl. gebildet sein.

Führungsgrößen, für die über die gesamte Prozeßzeit nur geringe Wichtungsfaktoren bestimmt werden können, eignen sich nicht zur Prozeßregelung. Sie müssen daher ausgesondert werden. Wo die Grenze für derartige Aussonderung zu setzen ist, ergibt sich daraus, ob es andere geeignetere Führungsgrößen gibt oder ob in bestimmten Prozeßstadien auf eine Regelung verzichtet werden kann.

Von Wichtigkeit ist, daß in die pauschalisierte Regelvorschrift bzw. -gleichung des Prozeßreglers die aktuellen Werte der Kennfunktionen als Istwerte, wie der Mittelfunktionen als Sollwerte eingehen. Die Differenzbildung der Werte liefert die Regelabweichung für jede Führungsgröße. Da die Führungsgrößen im Vergleich untereinander als auch bezogen auf die zeitliche Zuordnung zum Prozeßverlauf unterschiedlich signifikant sein können, werden die Regelabweichungen mit den zugehörigen Wichtungsfaktoren - Werten der Wichtungsfunktionen - multipliziert. Die Summe der gewichteten Regelabweichungen ergibt die Gesamtabweichung, die mit Hilfe eines wiederum prozeßspezifischen Umrechnungsfaktors in die Größenordnung der Stellgröße gebracht wird.

Die Erfindung wird nun im einzelnen anhand der Zeichnungen erläutert. In letzteren sind:

Fig. 1    ein Blockschaltbild einer Ausführungsform der Prozeßregelschaltung zur automatischen Bestimmung von Regelparametern,

Fig. 2    ein Blockschaltbild einer Schweißeinrichtung mit Steuer- und Regeleinrichtungen zur automatischen Bestimmung von Regelparametern,

Fig. 3    ein Diagramm, das einen typischen Verlauf des Ohmschen Widerstandes über den Schweißelektroden zeigt,

Fig. 4    ein Diagramm, das den Geschwindigkeitsverlauf der Elektrodenbewegung an einer Punktschweißzange zeigt,

Fig. 5    ein Diagramm, in dem die Streubereiche dreier Qualitäten: Gutpunkte, Klebepunkte, Spritzerpunkte für die Widerstandsänderung als angenommene Führungsgröße dargestellt sind, und

Fig. 6    ein Diagramm, in dem die Streubereiche für die drei Qualitäten: Gutpunkte, Klebepunkte, Spritzerpunkte für die Geschwindigkeitsänderung als angenommene Führungsgröße dargestellt sind.

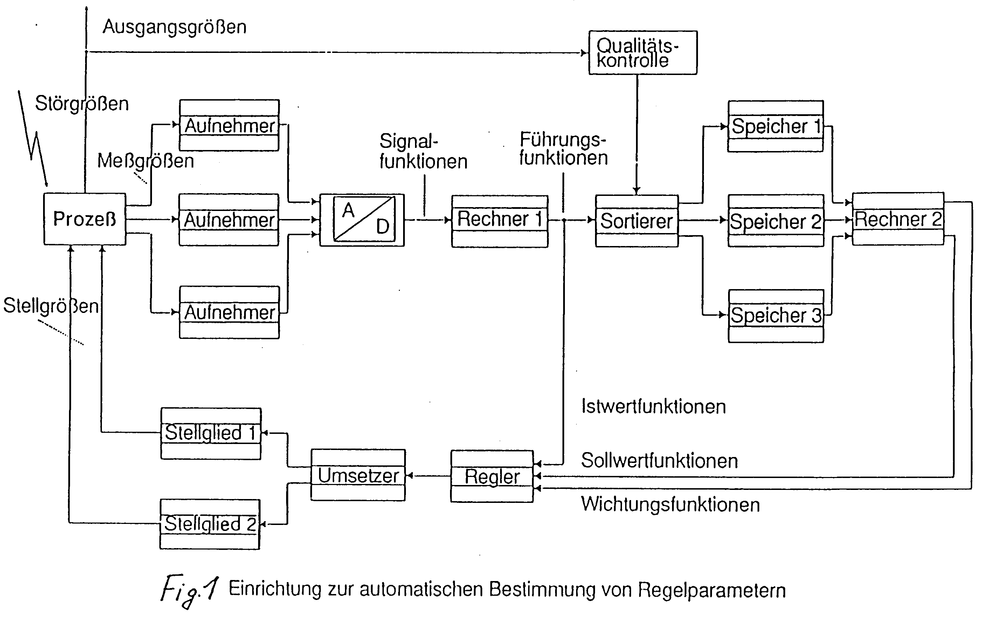

Wie des Blockschaltbild der Fig. 1 verdeutlicht, werden zur automatischen Parameterbestimmung für die Regelung eines Prozeßsystems mit unbekanntem Übertragungsverhalten unterschiedliche Meßgrößen von drei Sensoren 1 erfaßt und einem Analog-Digital-Wandler 2 zugeführt, in dem die erfaßten Signale für einen ersten Rechher 3 in lesbare Signalfunktionen umgeformt werden. Die Sensoren können je nach Anwendungsfall von optischen, chemischen und/oder elektrischen Aufnehmern für optische, elektrische, mechanische oder Stoffgrößen wie Konzentration, Dichte und dergleichen gebildet sein. In ersten Rechner 3 werden aus den Meßsignalen die Führungsfunktionen erstellt und einem mit einer Qualitätskontrolleinrichtung 5 gekoppelten Sortierer 6 zugeführt. Am ersten Rechner 3 ist die Möglichkeit gegeben, die Berechnungsvorschriften für die Führungsfunktionen flexibel zu ändern. Dadurch wird es zum einen ermöglicht, beliebige Prozesse zu untersuchen und zum anderen, bezüglich eines Prozesses verschiedenste Varianten von Führungsgrößen auf Aussagekraft zu prüfen. Werden die vom A/D-Wandler umgeformten Signale gespeichert, so läßt sich ein und derselbe Prozeß mit unterschiedlichen Führungsgrößen simulieren.

In der Qualitätsprüfung werden die Ergebnisse des Produktionsprozesses ermittelt. Diese Ergebnisse werden in Kategorien eingeteilt (z.B. zuwenig Energieeinsatz, normaler Energieeinsatz, zuviel Energieeinsatz). Anhand dieser Kategorien werden die Führungsfunktionen sortiert.

Der Sortierer 6 leitet die Führungsfunktionen nach Qualitäten geordnet in Speicher 7 weiter, deren Anzahl (im vorliegenden Beispiel drei) von den notwendigen Qualitätsunterscheidungen abhängt.

Ein zweiter Rechner 8 ist jeweils mit dem Ausgang der Speicher 7 verbunden und bildet aus den Daten in den jeweiligen Speichern 7 die Mittelwerte, die Standardabweichungen und im Anschluß daran die Führungsfunktionen nach dem unten weiter ausgeführten Verfahren.

Der zweite Rechner 8 ist ausgangsseitig mit dem Eingang eines Reglers 4 verbunden, die nach einer pauschalisierten Regelgleichung den Prozeß regelt und vom ersten Rechner 3 die Führungsfunktionen als Eingangsgröße und vom zweiten Rechner 8 die Sollwertfunktion und die Wichtungsfunktionen für die einzelnen Führungsfunktionen eingangsseitig aufnimmt.

Dem Regler 4 ist ein Umsetzer 9, nachgeschaltet, von dem die Regelergebnisse in Signale (z.B. bestimmte Spannungswerte) für einzelne, dem Umsetzer 9 nachgeschaltete Stellglieder umgewandelt werden.

Die Stellglieder 10 wirken, entsprechend dem Regelergebnis auf den Prozeß ein, so daß die Zielgröße des Prozesses erreicht werden kann.

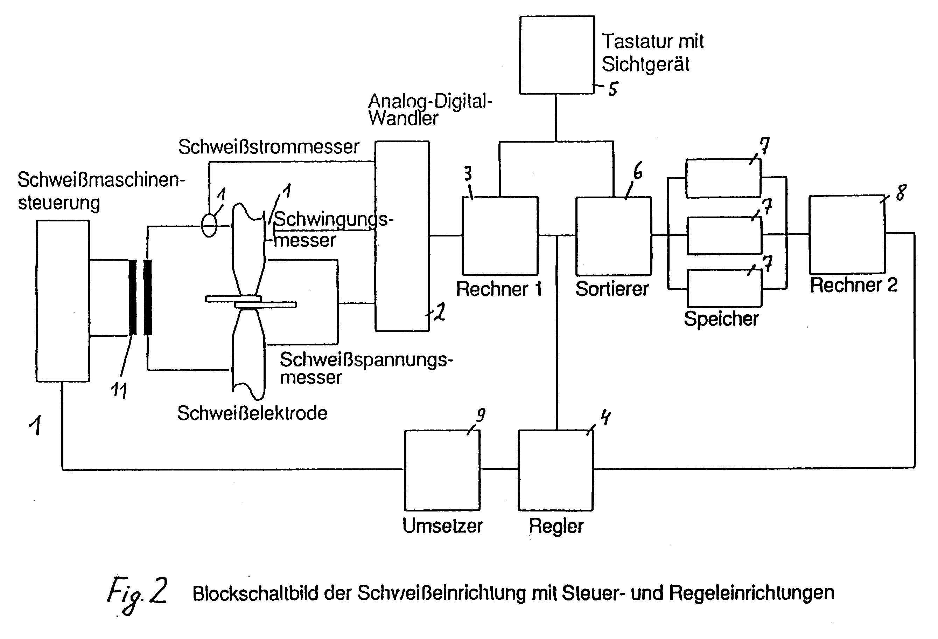

Das Blockschaltbild gemäß Fig. 2 verdeutlicht das Verfahren die Ausbildung der am Beispiel eines Punktschweißprozesses.

Als Sensorik ist hier ein Spannungsabgriff der Elektrodenspannung, ein Toroid mit dem dazugehörigen Wandler zur Bestimmung des Schweißstromes und ein Beschleunigungsaufnehmer zur Bestimmung der Elektrodenbewegung notwendig.

Im ersten Rechner 3 werden hieraus der Ohmsche Widerstand über den Elektroden und die Elektrodengeschwindigkeit als Führungsfunktionen berechnet.

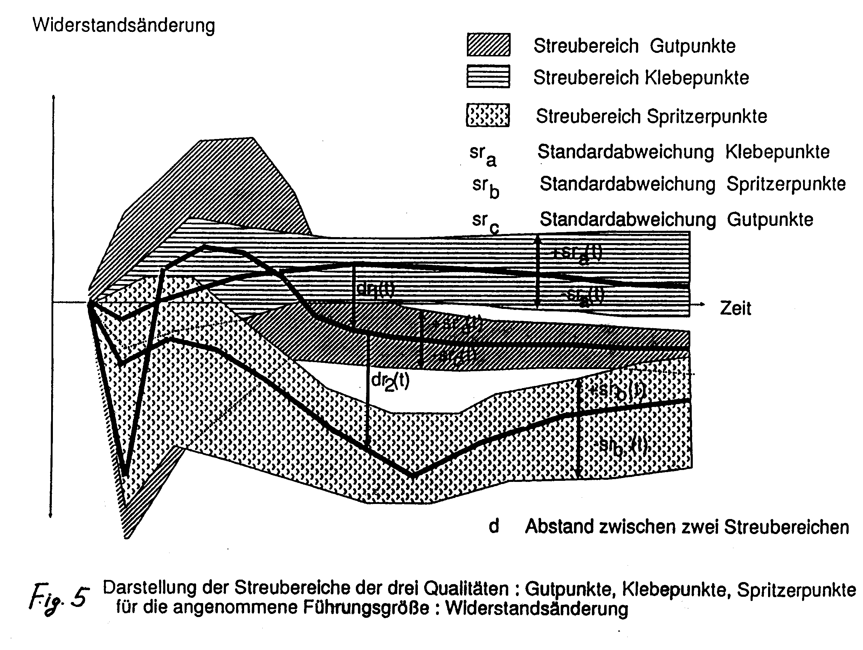

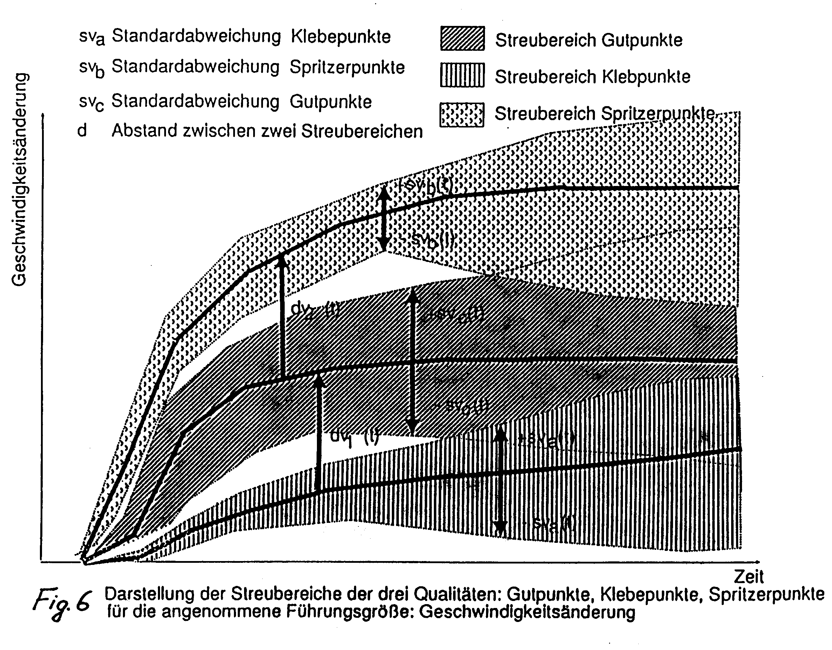

Die Qualitätsprüfung in der Qualitätskontrolle 5 erfolgt durch Auftrennen der Schweißpunkte. Aus der Haltbarkeit und der Aussage, ob es während der Schweißung zu einem Spritzer kam, wird die Einteilung in Qualitäten abgeleitet, wie sie im Zusammenhang mit den Fig. 5 und 6 dargelegt sind.

Die Führungsfunktionen werden durch den Sortierer 6 nach Qualitäten geordnet abgespeichert. Im einfachsten Fall werden Versuche durchgeführt, bei denen der Reihenfolge nach immer eine bestimmte Ergebnisqualität erreicht und anschließend abgespeichert wird.

Die Speicher 7 sind beispielsweise von Datendisketten oder elektronischen Speichermedien gebildet.

4

Im zweiten Rechner 8 werden aus den Daten in den jeweiligen Speicherzellen die Mittelwerte, die Standardabweichungen und im Anschluß daran die Führungsfunktionen mit den dazugehörigen Wichtungsfunktionen nach dem unten ausgeführten Verfahren bestimmt, und zwar aus den Mittelwerten der Gutschweißungen die Sollvorgabe für den Widerstandsverlauf und den Geschwindigkeitsverlauf.

Der Regler 4 besteht in diesem Fall aus einem Rechner, der die Regelgleichung berechnet und einen digitalen Stellwert für den Phasenanschnittswinkel der Stromverstellung für die Phasenanschnittssteuerung des Schweißtrafos 11 ausgibt.

Das Stellglied 10 ist die Phasenanschnittssteuerung des Schweißtrafos 11.

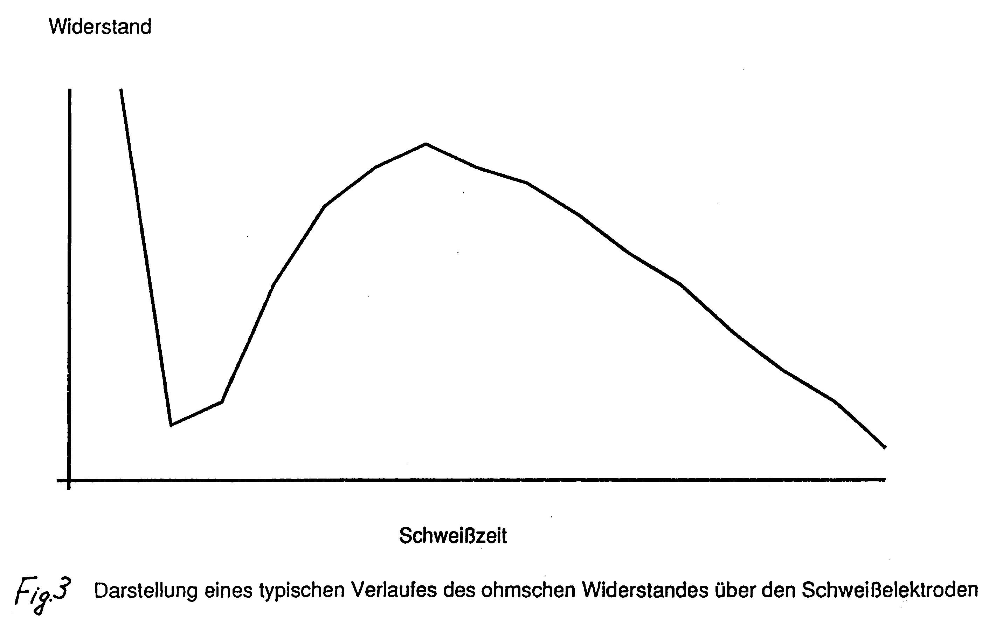

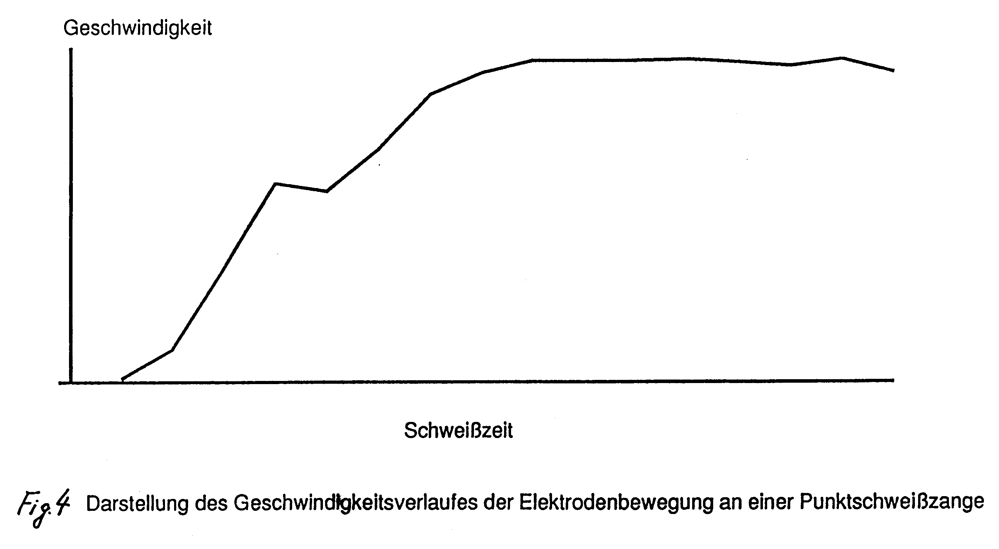

In Gen Fig. 3 und 4 ist ein typischer Verlauf des Ohmschen Widerstandes für die Schweißelektroden bzw. der Verlauf der Geschwindigkeit der Elektrodenbewegung an einer Punktschweißzange dargestellt.

Bezüglich des Prozeßregelsystems zum Widerstandspunktschweißen wird angenommen, daß sich prinzipiell die Änderung des Ohmschen Werkstoffwiderstandes über dem Schweißpunkt und die Schwinggeschwindigkeit der Schweißelektroden, verursacht durch die Wärmeausdehnung des Werkstoffes, als Führungsgrößen eignen. Die folgenden Ausführungen sind jedoch nur beispielhaft und die genannten Ergebnisse nicht zu einer tatsächlichen Regelung des Punktschweißprozesses geeignet.

Die Schweißzeit beträgt im gewählten Deispiel 160 ms. Geschweißt wird mit 50 Hz Wechselstrom. Fig. 3 zeigt einen typischen Widerstandsverlauf (Widerstandsmittelwerte je 10 ms = eine Stromhalbwelle in Abhängigkeit von der Schweißzeit). Fig. 4 zeigt einen typischen Verlauf der Schwinggeschwindigkeit der Schweißelektroden über der Schweißzeit (auch hier Mittelwerte je 10 ms = eine Stromhalbwelle). Mit einem Meß- bzw. Rechensystem werden jetzt derartige Führungsgrößen für eine Vielzahl von Schweißungen aufgenommen. Daran anschließend wird eine Qualitätsprüfung aller geschweißten Punkte durchgeführt. Hier gibt es zwei verschiedene Kriterien der Punktbeurteilung (Bestimmung der Zielfunktion):

1. Unterteilung in:

a) der Schweißpunkt weist nicht die genügende Festigkeit auf, schlechte Qualität (Klebepunkt).

b) der Schweißpunkt weist genügend Festigkeit auf, gute Qualität (Gutpunkt).

2. Unterteilung in:

a) Der Schweißpunkt weist nicht die genügende Festigkeit auf, es wurde zuwenig Energie in die Schweißlinse eingebracht (Klebepunkt).

b) Der Schweißpunkt weist genügend Festigkeit auf, es wurde aber zuviel Energie in die Schweißlinse eingebracht, so daß es zu Spritzern kam (Spritzerpunkte).

c) Der Schweißpunkt weist genügend Festigkeit auf. Es kam nicht zu einem Spritzer (Gutpunkte).

Vergleichbare Unterscheidungen der Zielfunktion sind auch bei anderen Prozessen denkbar. Für beide Unterscheidungen der Zielfunktionen ist das aufgezeigte Verfahren anwendbar.

Nachdem die Unterscheidungen getroffen sind, werden für jede Halbwelle die Mittelwerte mit den dazugehörigen Standardabweichungen aus allen Führungsgrößen einer Qualität (Klebepunkt, Gutpunkt bzw. Spritzerpunkt) berechnet.

$$\underline{R}_j = \frac{1}{n} \sum_{i=1}^{n} R_{ij} \qquad j=1..16$$

$\underline{R}$     - Mittelwert der Widerstandsänderungswerte einer Qualität
$j$     - Stromhalbwelle

$$sr_j = \sqrt{\frac{1}{n-1} \sum_{i=1}^{n} (R_{ij} - \underline{R}_j)^2}$$

$sr$     - Standardabweichung der Widerstandsänderungswerte einer Qualität
$j$     - Stromhalbwelle

$$\underline{v}_j = \frac{1}{n} \sum_{i=1}^{n} v_{ij} \qquad j=1..16$$

$\underline{v}$ - Mittelwert der Geschwindigkeitsänderungswerte einer Qualität
j - Stromhalbwelle

$$sv_j = \sqrt{\frac{1}{n-1} \sum_{i=1}^{n} (v_{ij} - \underline{v}_j)^2}$$

sv - Standardabweichung der Geschwindigkeitsänderungswerte einer Qualität
j - Stromhalbwelle

Mit den berechneten Werten lassen sich zu jeder Qualität eine Mittelwertkurve und eine Streufläche (alle Punkte innerhalb des Bereiches Mittelwert plus Standardabweichung und Mittelwert minus Standardabweichung) der Widerstandsänderung und der Geschwindigkeitsänderung (d.h. der vermuteten Führungsgrößen) über der Zeit auftragen (Fig. 5 und 6). Es ist offensichtlich, daß, wenn sich die Streuflächen der Widerstandsänderung für die einzelnen Qualitäten deutlich unterscheiden, eine hohe Signifikanz der Widerstandsänderung bezüglich der Zielfunktion vorliegt. Im anderen Fall: Wenn sich die Streuflächen teilweise oder ganz überdecken, liegt diese Signifikanz weniger bzw. gar nicht vor. Für jeden Zeitabschnitt werden die Streuflächen der einzelnen Qualitäten verschiedene Abstände zueinander besitzen, so daß die Signifikanz im Verlaufe der Prozeßzeit variiert. Ebenso wird die Trennung zwischen Klebepunkten und Gutpunkten bzw. Gutpunkten und Spritzerpunkten unterschiedlich sein. So kann es sein, daß mit der gewählten Führungsgröße (im Beispiel die Widerstandsänderung) Spritzerpunkte von Gutpunkten kaum unterschieden werden können, hingegen Klebepunkte sehr gut von Gutpunkten unterschieden werden können. Analoges gilt für die Geschwindigkeitsänderung (d.h. für alle weiteren möglichen Führungsgrößen).

Die Wichtungsfaktoren berechnen sich als Funktionen der in den Streubändern vorkommenaen Größen. Bei der Unterscheidung in drei Qualitäten werden neben den Beträgen der Wichtungsfaktoren auch deren Vorzeichenwechsel im Verlaufe der Prozeßzeit mitbestimmt. Der Anwender muß das Vorzeichen nur zu einer einzigen frei wählbaren Prozeßzeit aus den physikalischen Gegebenheiten bestimmen. Hierbei ist es von Vorteil, wenn die Qualitätsunterscheidungen so getroffen werden, daß die drei Qualitäten auch drei Richtungen der Stellgröße zuzuordnen sind. Der Regler 4 regelt z.B. die Energieeinbringung, daher die Unterscheidung in zuviel, zuwenig und richtige Energieeinbringung. Bei der Unterscheidung in nur zwei Qualitäten ist die automatische Vorzeichenbestimmung nicht möglich.

Die Wichtungsfaktoren berechnen sich nach der folgenden grundlegenden Vorschrift: $d_1(t)$ ist der Abstand zwischen den Mittelwerten einer gewählten Führungsgröße $F_i(t)$ (in unserem Beispiel $\underline{R}_j$ und $\underline{v}_j$, vgl. Fig. 5 und 6) der Qualität a (Klebepunkte) - Qualität c (Gutpunkte). $d_2(t)$ ist der entsprechende Abstand der Qualität c (Gutpunkte) - Qualität b (Spritzerpunkte). ($d_{1R}(t) = \underline{R}_a(t) - \underline{R}_c(t)$, analog für $\underline{v}$).

Sind die Vorzeichen von $d_1$ und $d_2$ unterschiedlich, d.h. beide negativen Streubänder (Klebe- und Spritzerpunkte) liegen auf einer Seite bezüglich des positiven Streubandes (Gutpunkte), so hat der Wichtungsfaktor W(t) für den Fall, daß beide anderen Streubänder Qualitäten zuzuordnen sind, die ein negatives Regelergebnis erbrächten, den Wert O.

Wechseln $d_1$ und $d_2$ ihr Vorzeichen, so wechselt auch der Wichtungsfaktor sein Vorzeichen. In unserem Beispiel berechnet sich das Vorzeichen nach

$$W_{ri}(t)/|W_{ri}(t)| = dr_1(t)/|dr_1(t)| = dr_2(t)/|dr_2(t)| \text{ und}$$

$$W_{vi}(t)/|W_{vi}(t)| = - dv_1(t)/|dv_1(t)| = - dv_2(t)/|dv_2(t)|; d,W <> O.$$

Für alle weiteren Fälle läßt sich ein Bewertungsschema aufstellen. Zuerst werden zwei Bewertungszahlen Q für jede Führungsgröße berechnet (vgl. Fig. 5 und 6).

$$Q_{ac} = \frac{|d_1(t)| - [S_c(t) + S_a(t)]}{|d_1(t)|}$$

$$Q_{bc} = \frac{|d_2(t)| - [S_c(t) + S_b(t)]}{|d_2(t)|}$$

Anschließend werden für jede Bewertungszahl die folgenden Grenzwerte festgelegt.

$$d_i(t), d_2(t) = 0 ==> |W_i(t)| = 0, \text{ Streubereiche liegen ineinander.}$$

```
               /‾‾‾
               |  >=1/3 ==>  |W₁(t)|=1, Streubereiche haben
               |                        zueinander einen
               |                        Abstand, der größer
               |                        als die mittlere
               |                        Standardabweichung
               |                        ist.
               |  (>= obere Grenze G₀==>  |W₁(t)|=1)
               |
Q_ac,   Q_bc  <|  =0      ==>  |W₁(t)|<1, Streubereiche
               |                         berühren einander.
               |
               |  =-1                    Streubereiche über-
               |                         lappen genau zur
               |                         Hälfte der mittleren
               |                         Bereichsbreite.
               |
               |  <=-7   ==>  |W₁(t)|=0, Streubereiche über-
               |                         lappen zu 3/4 der
               |                         mittleren Band-
               |                         breite.
               |
               |  (<= untere Grenze G_u==>  |W₁(t)|=0)
               \___
```

Nach einfacher Proportionalitätsrechnung ergibt sich für den Wichtungsfaktor:

$$|W_1(t)| = 1/(G_o - G_u) * Q(t) - G_u/(G_o - G_u), \quad G_u <= Q(t) <= G_o.$$
$$|W_1(t)| = 1, \quad Q > G_o.$$
$$|W_1(t)| = 0, \quad Q < G_u.$$

Es werden sich bei Einsetzen von $Q_{ac}$ und $Q_{bc}$ unterschiedliche Wichtungsfaktoren ergeben. Sind beide Qualitätsunterscheidungen gleich wichtig, muß der kleinere Wichtungsfaktor Verwendung finden. Im anderen Fall wird der für die wichtigere Unterscheidung berechnete Wichtungsfaktor verwendet.

Im vorliegenden Beispiel ist es wichtiger, Klebepunkte als Spritzerpunkte zu vermeiden. Deshalb wird hier der Wichtungsfaktor, der aus der Unterscheidung Klebe-Gutpunkte berechnet wurde, verwendet.

Bei spezifischen Regeleinrichtungen ist es denkbar, die Grenzen $G_u$ und $G_o$ zu verschieben. Auch kann es sinnvoll sein, die lineare Abhängigkeit durch eine exponentielle zu ersetzen. Das wird bei stark nichtlinearen Regelstrecken, die sich mit der einfachen Methode nicht beherrschen lassen, notwendig werden.

**Patentansprüche**

1. Verfahren zur automatischen Parameterbestimmung für Prozeßregelsysteme mit unbekanntem Übertragungsverhalten mit,
   mindestens einen Meßgrößen des zu regelnden Prozesses aufnehmenden Sensor, der ausgangsseitig mit einem A/D-Wandler verbunden ist, dem ein erster, die Signalfunktionen des A/D-Wandlers in Führungsfunktionen umformender Rechner nachgeschaltet ist,
   <u>dadurch gekennzeichnet,</u> daß

a) - die Führungsfunktionen einerseits dem Prozeßregler (4) eingegeben und anderserseits in einer dem ersten Rechner (1) nachgeschalteten Reihenschaltung eines mit einer Qualitätskontrolle (5) gekoppelten Sortierers (6), von mit dessen Ausgang verbundenen, parallelgeschalteteten Speichern (7) und eines mit deren Ausgängen eingangsseitig verbundenen zweiten Rechners (8), der ausgangsseitig mit der Eingangsseite des Prozeßreglers (4) verbunden ist, bezüglich der Einhaltung bestimmter Grenzen der Ausgangsgrößen des Schaltung nach maximal drei Kategorien vom Sortierer (6) sortiert und in den Speichern (7) gespeichert werden: "c": Stellgröße optimal = optimales Prozeßergebnis; "a": Stellgröße zu klein = negative Abweichung vom optimalen Prozeßergebnis und/oder "b": Stellgröße zu groß = positive Abweichung vom optimalen Prozeßergebnis,

b) - für die Führungsfunktionen im zweiten Rechner (8) jeweils die Mittelwertfunktionen $F_i(t)$ und Funktionen der Standardabweichungen $S(t)$ über den zeitlichen Verlauf des Prozesses gebildet werden,

c) - die Mittelwertfunktion der sortierten und gespeicherten Kategorie "c" dem Regler (4) direkt als Sollwertfunktion eingegeben wird,

d) - die Mittelwert- und Standardabweichungsfunktionen aller Kategorien dem zweiten Rechner (8) zur Ermittlung von Wichtungsfunktionen, gemäß nachstehender Rechenvorschrift, eingegeben werden:

$d_1$) - Im ersten Schritt werden die Bewertungsfunktionen $Q_i(t)$:

$$Q_{ac} = \frac{|d_1(t)| - [S_c(t) + S_a(t)]}{|d_1(t)|}$$

$$Q_{bc} = \frac{|d_2(t)| - [S_c(t) + S_b(t)]}{|d_2(t)|}$$

berechnet.

$d_2$) - Im zweiten Schritt werden für beide Bewertungsfunktionen jeweils Wichtungsfunktionen betragsmäßig berechnet:

$$|W_i(t)| = 1 / (G_o - G_u) \cdot Q_i(t) - G_u/(G_o - G_u), \quad G_u \leq Q_i(t) \leq G_o.$$

$$|W_i(t)| = 1 \qquad\qquad\qquad\qquad , \quad Q_i(t) > G_o$$

$$|W_i(t)| = 0 \qquad\qquad\qquad\qquad , \quad Q_i(t) < G_u$$

$d_3$) - Verwendung findet der zu jedem Zeitpunkt betragsmäßig kleinere Wichtungsfaktor.

$d_4$) - Das Vorzeichen der Wichtungsfunktionen wird bestimmt nach:

$$\frac{W_i(t)}{|W_i(t)|} = \frac{d_1(t)}{|d_1(t)|} = \frac{d_2(t)}{|d_2(t)|}$$

wobei sich bei

$$\frac{d_1(t)}{|d_1(t)|}$$

ungleich

$$\frac{d_2(t)}{|d_2(t)|}$$

für $W_i(t) = 0$ ergibt
und die Symbole

| | |
|---|---|
| $d_1(t)$, $d_2(t)$ | : Abstand der Mittelwertkurven der Kategorien "a" und "b" zur Kategorie "c" |
| $S_a(t)$, $S_b(t)$, $S_c(t)$ | : Standardabweichungsfunktion der Kategorien |
| $W_i(t)$ | : Wichtungsfunktionen |
| $G_o$ | : obere Grenze von $Q_i(t)$ |
| $G_u$ | : untere Grenze von $Q_i(t)$ |
| i | : ac, bc |

bedeuten,

e) - die Wichtungsfunktionen für die einzelnen Führungsfunktionen ebenfalls dem Regler (4) eingegeben werden, und

f) - der Ausgang eines des Regler (4) nachgeschalteten Umsetzers (9) mit diesem verbundenen, in den Prozeß eingreifenden Stellgliedern (10) zugeführt wird.

2.  Verfahren nach Anspruch 1, <u>dadurch gekennzeichnet,</u> daß die Sollwertfunktionen und die Wichtungsfunktion der Führungsgrößen in nachfolgende pauschalisierte Regelvorschrift des Prozeßreglers Eingang finden:

$$dS(t) = \sum_{i=1}^{n} U_i \cdot [((F_{soll_i}(t) - F_{ist_i}(t)) - W_i(t)]$$

wobei sind:

ds - Änderung der Stellgröße zwischen zwei Regeleingriffen
U - Umrechnungsfaktor, der von der jeweiligen Aufgabe abhängt
F - Führungsfunktion
W - normierte Wichtungsfunktion
t - Prozeßzeit (Prozeßstadium), kontinuierlich oder diskret
i - Index der i-ten Führungsfunktion
n - Anzahl der Führungsfunktionen
soll - Vorgabewert
ist - tatsächlich gemessener bzw. aus Messungen bestimmter Wert

3.  Verfahren nach Anspruch 1 und 2 zum Widerstandspunktschweißen, <u>dadurch gekennzeichnet</u>, daß die Änderung des Ohmschen Werkstoffwiderstandes über dem Schweißpunkt und/oder die durch die Wärmeausdehnung verursachte Schwinggeschwindigkeit der Schweißeelektroden die Führungsfunktion bildet.

4.  Verfahren nach Anspruch 1, <u>dadurch gekennzeichnet</u>, daß die mit dem Sortierer (6) gekoppelte Qualitätskontrolle (5) von einem Sichtgerät mit Tastatur gebildet ist.

**Claims**

1. Process for automatic determination of parameters for process control systems with unknown transfer behaviour, comprising at least one sensor for sensing measured variables of the process which must be controlled, with the sensor on the output side being concected with an analog- to-digital converter, which is succeeded by a first computer, by which signal functions of the analog-to-digital converter can be converted into command functions, <u>characterized in that</u>

    a) - the command functions, on the one hand, are entered into the process controller (4) and, on the other hand, are sorted in a series connection succeeding the first computer (1) and comprising a sorter (6), coupled with a quality control (5), memories (7), which are parallel connected and connected with the output of the sorter (6), and a second computer (8), whose input side and output side is connected with the outputs of the memories (7) respectively with the input side of the process controller (4), by the sorter (6) with respect to maintaining particular limits of the output variables of the system according to three categories, and are stored in the memories (7) : "c" manipulated variable optimal = optimal process result; "a" manipulated variable too low = negative deviation from the optimal process result and/or "b" manipulated variable too high = positive deviation from the optimal process result;

    b) - in each instance the mean value functions $F_i(t)$ and functions of the standard deviations $S(t)$ are formed for the command functions over the progression in time of the process;

    c) - the mean value function of the sorted and stored category "c" is entered into the conroller (4) directly as nominal value function;

    d) - the mean value- and standard deviation functions are input into the second computer (8) for determining weighting functions according to the following calculation rule:

    $d_1$) - in the first step the evaluation functions $Q_i(t)$ are calculated:

    $$Q_{ac} = \frac{|d_1(t)| - [S_c(t) + S_a(t)]}{|d_1(t)|}$$

    $$Q_{bc} = \frac{|d_2(t)| - [S_c(t) + S_b(t)]}{|d_2(t)|}$$

    $d_2$) - in the second step in each instance weighting functions are calculated in amounts for both evaluation functions:

    $$|W_i(t)| = 1 / (G_o - G_u) \cdot Q_i(t) - G_u/(G_o - G_u), \quad G_u \leq Q_i(t) \leq G_o.$$

    $$|W_i(t)| = 1 \qquad\qquad , \quad Q_i(t) > G_o$$

    $$|W_i(t)| = 0 \qquad\qquad , \quad Q_i(t) < G_u$$

    $d_3$) - the weighting factor is used, which comprises in each moment the smaller amount;

    $d_4$) - the sign of the weighting function is determined as following:

    $$\frac{W_i(t)}{|W_i(t)|} = \frac{d_1(t)}{|d_1(t)|} = \frac{d_2(t)}{|d_2(t)|}$$

wherein with:

$$\frac{d_1(t)}{|d_1(t)|}$$

unequal

$$\frac{d_2(t)}{|d_2(t)|}$$

is $W_i(t) = O$
and with the following meaning of the symbols:

$d_1(t)$, $d_2(t)$        : distance of the mean value curves of the categories "a" and "b" to the category "c"

$S_a(t)$, $S_b(t)$, $S_c(t)$        : standard deviation function of the categories

$W_i(t)$        : weighting functions

$G_o$        : upper limit of $Q_i(t)$

$G_u$        : lower limit of $Q_i(t)$

i        : ac, bc

e) - the weighting functions for the individual command functions are also entered into the controller (4) and

f) - the output of a converter (9) succeeding the controller (4) is fed to setting elements (10) connected with the converter (9) and acting on the process.

2. Process as stated in claim 1, <u>characterized in that</u> the nominal value function and the weighting function of the command variables are integrated into the following

$$dS(t) = \sum_{i=1}^{n} U_i \cdot [(F_{soll_i}(t) - F_{ist_i}(t)) - W_i(t)]$$

wherein are:

ds     - Change of the manipulated variable between two regulation interventions
U     - Conversion factor depending on the particular task
F     - Command function
W     - Normalized weighting factor
t     - Process time (process stage), continous or discrete
i     - Index of ith command variables
n     - Number of command variables
soll     - given value (nominal)
ist     - actual measured value or value determinded from measurements

3. Process as stated in claim 1 nad 2, used for resistance spot welding, <u>characterized in that</u> the command function is formed by the change of the ohmic material resistance across the welding spot and/or by the oscillation velocity of the welding electrodes caused by the thermal expansion.

4. Process as stated in claim 1, <u>characterized in that</u> the quality control (5) coupled with the sorter (6) is formed by an optical display with keyboard.

**Revendications**

1. Procédé pour la détermination automatique de paramètres pour de systèmes de réglaçe d'opérations avec un comportement de transmission innconnu avec au moins un senseur recevant des grandeurs mesurées de l'opération à regler relié à la sortie avec un transformateur A/D à la suite duquel est connecté un premier ordinateur transformant les fonctions-signal du transformateur A/D en fonctions-guide,
<u>caractérisé par le fait</u> que

a) - d'une part les fonctions-guide sont introduite dans le régulateur d'opération (4) et sont d'autre part dans un montage en série connecté à la suite du premier ordinateur (1) d'une trieuse (6) couplée à un dispositif de contrôle de qualité (5), par des mémoires (7) montées en parallèle, reliées à sa sortie et un deuxième ordinateur (8) rellé avec son entrée à leurs sorties qui avec sa sortie est relié à l'entrée du régulateur d'opération (4) triées par la trieuse (6) concernant l'observation de limites déterminées des grandeurs de sortie du couplage suivant au maximum trois catègories et mémorisées dans les mémoires (7): "c": grandeur de réglage optimum = résultat d'opération optimum; "a": grandeur de réglage trop petite = déviation négative du résultat d'opération optimum et/ou "b": grandeur de réglage trop grande = déviation positive du résultat d'operation optimum.

b) - pour les fonctions-guide dans le deuxième ordinateur (8) les fonctions de moyennes $F_i(t)$ et les fonctions des déviations standard $S(t)$ sont prises pendant l'écoulement de l'opération.

c) - la fonction de moyennes de la catégorie "c" triée et mémorisée est introduite directement à l'ordinateur (4) en tant que fonction de valeur nominale,

d) - les fonctions de moyennes et de déviations standard de toutes les catégories sont introduites dans le deuxième ordinateur (8) pour déterminer des fonctions de pondération suivant la prescriptions de calcul ci-dessous:

$d_1$) - Dans un premier pas sont calculées les fonctions d'evaluation $Q_i(t)$:

$$Q_{ac} = \frac{|d_1(t)| - [S_c(t) - S_a(t)]}{|d_1(t)|}$$

$$Q_{bc} = \frac{|d_2(t)| - [S_c(t) - S_b(t)]}{|d_2(t)|}$$

$d_2$) Dans un deuxième pas des fonctions de pondération sont calculées quant à la somme pour des deux fonctions d'évaluation;

$$|W_i(t)| = 1/(G_o - G_u) \cdot Q_i(t) - G_u/(G_o - G_u), \quad G_u \leq Q_i(t) \leq G_o$$

$$|W_i(t)| = 1 \qquad , Q_i(t) > G_o$$

$$|W_i(t)| = 0 \qquad , Q_i(t) \leq G_u$$

$d_3$) - Le facteur de pondération avec la somme plus petite à tout moment est appliqué.

d$_4$) - Le signe des fonctions de pondération est détermineé suivant:

$$\frac{W_i(t)}{|W_i(t)|} = \frac{d_1(t)}{|d_1(t)|} \quad \frac{d_2(t)}{|d_2(t)|}$$

$$\frac{d_1(t)}{|d_1(t)|}$$

inégal à

$$\frac{d_2(t)}{|d_2(t)|}$$

donnant pour W$_i$(t) = O
et les symboles significant:

| | |
|---|---|
| d$_1$(t), d$_2$(t) | : distance des courbes de moyennes des catégories "a" et "b" par rapport à la catégorie " |
| S$_a$(t), S$_b$(t), S$_c$(t) | : fonction de déviations standard des catégories |
| W$_i$(t) | : fonctions de pondération |
| G$_o$ | : limite supérieure de Q$_i$(t) |
| G$_u$ | : limite inférieure de Q$_i$(t) |
| i | : ac, bc |

e) - les fonctions de pondération pour les différentes fonctions-guide sont également introduites dans l'ordinateur (4), et

f) - la sortie d'un convertisseur (9) connecté à la suite du régulateur (4) est amenée à des éléments de réglage (10) relié à celui-ci et intervenant dans l'opération.

2. Procédé suivant revendication 1, caractérisé par le fait, que les fonctions de valeur nominale et la fonction de pondération des grandeurs-guide entrent dans la prespription de réglage généralisée ci-dessous du régulateur d'opération:

$$dS(t) = \sum_{i=1}^{n} U_i = [(Fsol_i{}^{(t)} - F_{ist}(t)) = W_i(t)]$$

dont la signification est:

ds        - modification de la grandeur de réglage entre deux attaques de réglage
U         - facteur de conversion dépendant de la fonction respective
F         - fonction-guide
W         - fonction de pondération normalisée
t         - temps d'opération (phase d'opération) continue ou illisible

i       - index de la i ième fonction-guide

n      - nombre des fonctions-guide

sol     - valeur prédéterminée

ist     - valeur mesurée réellement ou déterminée en raison de mesures

3.   Procédé suivant revendications 1 et 2 pour la soudage à résistance par points <u>caractérisé par le fait</u> que la modification de la résistance de matière Ohm au-dessus du point de soudage et/ou la vitesse oscillante des électrodes de soudage causée par la dilatation thermique constitue la fonction-guide.

4.   Procédé suivant revendication 1, <u>caractérisé par le fait</u> que le dispositif de contrôle de qualité (5) couplé à la trieuse (6) est constitué par un dispositif indicateur avec clavier.

*Fig.1* Einrichtung zur automatischen Bestimmung von Regelparametern

Ausgangsgrößen

Störgrößen

Meßgrößen

Stellgrößen

Prozeß

Aufnehmer

Aufnehmer

Aufnehmer

A / D

Signalfunktionen

Rechner 1

Führungsfunktionen

Sortierer

Qualitätskontrolle

Speicher 1

Speicher 2

Speicher 3

Rechner 2

Istwertfunktionen

Sollwertfunktionen

Wichtungsfunktionen

Regler

Umsetzer

Stellglied 1

Stellglied 2

Tastatur mit Sichtgerät — 5

Analog-Digital-Wandler

Schweißstrommesser

Schweißmaschinen-steuerung

1

1

Schwingungs-messer

Schweißspannungs-messer

Schweißelektrode

11

1

Rechner 1 — 3

Sortierer — 6

2

Speicher

7
7
7

Rechner 2 — 8

Umsetzer — 9

Regler — 4

*Fig. 2*   Blockschaltbild der Schweißeinrichtung mit Steuer- und Regeleinrichtungen

EP 0 452 440 B1

Widerstand

Schweißzeit

*Fig.3*    Darstellung eines typischen Verlaufes des ohmschen Widerstandes über den Schweißelektroden

EP 0 452 440 B1

Geschwindigkeit

Schweißzeit

EP 0 452 440 B1

*Fig. 4* Darstellung des Geschwindigkeitsverlaufes der Elektrodenbewegung an einer Punktschweißzange

Widerstandsänderung

Legend:

Streubereich Gutpunkte

Streubereich Klebepunkte

Streubereich Spritzerpunkte

$sr_a$ — Standardabweichung Klebepunkte

$sr_b$ — Standardabweichung Spritzerpunkte

$sr_c$ — Standardabweichung Gutpunkte

d — Abstand zwischen zwei Streubereichen

Fig. 5  Darstellung der Streubereiche der drei Qualitäten : Gutpunkte, Klebepunkte, Spritzerpunkte für die angenommene Führungsgröße : Widerstandsänderung

EP 0 452 440 B1

EP 0 452 440 B1

sv$_a$  Standardabweichung  Klebepunkte

sv$_b$  Standardabweichung  Spritzerpunkte

sv$_c$  Standardabweichung  Gutpunkte

d      Abstand zwischen zwei Streubereichen

▨ Streubereich Gutpunkte

|||| Streubereich Klebpunkte

▧ Streubereich Spritzerpunkte

Geschwindigkeitsänderung

Zeit

Fig. 6  Darstellung der Streubereiche der drei Qualitäten: Gutpunkte, Klebepunkte, Spritzerpunkte für die angenommene Führungsgröße: Geschwindigkeitsänderung